# DEMANDE DE BREVET EUROPEEN

(11) **EP 4 640 378 A1**
(43) Date de publication de la demande: **29.10.2025**
(21) Numéro de dépôt: 25157912.4
(22) Date de dépôt: 14.02.2025
(51) Int. Cl.: B25F 5/02, A01G 3/02, B26B 15/00

(54) **OUTIL ÉLECTROPORTATIF ET SON PROCÉDÉ DE FABRICATION**

(30) Priorité: 23.04.2024 CH 4472024; 23.04.2024 FR 2404202; 29.08.2024 CH 9052024
(71) Demandeur: Felco SA, 2206 Les Geneveys-sur-Coffrane (CH)
(72) Inventeur: Saint-Raymond, Louis, 2000 Neuchâtel (CH)
(74) Mandataire: P&TS SA (AG, Ltd.)

(57) **Abrégé**

L'invention concerne un outil électroportatif (10) comprenant :
- un corps (6) au moins partiellement électriquement isolant, comprenant :
- un actionneur,
- une transmission reliant l'actionneur à un organe d'usinage (4), de façon à permettre un déplacement de l'organe d'usinage (4) par rapport à un organe de support (2),
- l'organe d'usinage (4) et/ou l'organe de support (2) étant réalisé(s) au moins en partie en matériau conducteur électrique
- au moins une surface de contact électrique, arrangée pour entourer au moins partiellement le corps (6) et pour être saisie par l'utilisateur,
ledit outil électroportatif (10) étant arrangé pour comprendre un système de sécurité pour un utilisateur, ledit système de sécurité étant arrangé pour mesurer une impédance entre la surface de contact électrique et l'organe d'usinage (4) et/ou l'organe de support (2), et pour réduire ou annuler la vitesse de l'actionneur sur la base de cette mesure d'impédance afin de protéger l'utilisateur.

Selon l'invention, la surface de contact électrique comprend au moins deux zones de contact électrique (50) qui sont distinctes et séparées, et l'outil électroportatif (10) comprend un élément de liaison (7) en matériau conducteur électrique à l'intérieur du corps (6) de l'outil électroportatif (10) et arrangé pour être en contact électrique avec chaque zone de contact électrique (50), afin de relier électriquement les zones de contact électrique (50) entre elles.

## Description

### Domaine technique

La présente invention concerne un outil électroportatif, notamment un sécateur électroportatif arrangé pour comprendre un système de sécurité nécessitant que la lame mobile et/ou la lame fixe soit(soient) réalisée(s) au moins en partie en matériau conducteur électrique. La présente invention concerne aussi un procédé de fabrication d'un tel outil électroportatif.

### Etat de la technique

Dans le contexte de la présente invention, l'expression « outil électroportatif » désigne un outil électrique ou alimenté électriquement. L'outil peut être alimenté électriquement par une source d'alimentation autonome. Pendant son utilisation, il est porté par un membre de l'utilisateur, par exemple par sa main. En particulier, le même membre qui porte un tel outil permet également de le commander, par exemple à l'aide d'une gâchette. Un outil électroportatif n'a pas une position stationnaire pendant son utilisation, car l'utilisateur le déplace, par exemple pour usiner un nouvel objet ou pour mieux usiner le même objet. En d'autres termes, un outil électroportatif n'est pas stationnaire, c'est-à-dire il n'occupe pas toujours la même position. Il est donc clair à la lumière de cette définition qu'une machine telle qu'une scie stationnaire, par exemple une scie circulaire sur table ou bien une cisaille d'établi, ne rentre pas dans la définition d'outil électroportatif donnée dans ce contexte.

La source d'alimentation d'un tel outil électroportatif peut être par exemple une batterie ou bien un pack de batteries. Dans un cas, la source est une pièce séparée de l'outil. En particulier l'utilisateur peut porter avec une main l'outil et simultanément porter sur lui, par exemple à l'aide d'un sac-à-dos, d'un harnais ou d'une ceinture, la source d'alimentation. Dans un autre cas, la source d'alimentation d'un tel outil électroportatif est dans l'outil électroportatif.

Un outil électroportatif comprend un actionneur, par exemple un moteur, pour transmettre une force à un objet externe sur lequel l'outil agit.

Un sécateur, des cisailles, des pinces, des presses, une tronçonneuse portative, une scie circulaire portative, une scie sauteuse portative, un rabot, une sertisseuse, une défonceuse, etc. pour des applications agricoles, viticoles, arboricoles, industrielles, artisanales, textiles, alimentaires, médicales, etc. sont des exemples non limitatifs d'outils électroportatifs selon l'invention.

Un outil électroportatif comprend un organe d'usinage et un organe de support pour cet objet. L'organe d'usinage permet d'usiner un objet et entre en contact direct avec cet objet. Il est mobile pendant l'usinage de l'objet et actionné par l'actionneur de l'outil électroportatif.

Dans le contexte de la présente invention, le mot « usiner » indique toute opération effectuée sur l'objet qui permet de le transformer, par exemple de le couper, presser, trancher, raboter etc.

L'organe de support supporte l'objet pendant son usinage et en général il est fixe pendant l'usinage de l'objet. En général, l'organe de support n'est pas actionné par l'actionneur de l'outil électroportatif. Sa présence est nécessaire pour réaliser cet usinage. L'organe de support est également en contact direct avec cet objet pendant son usinage. Dans certains cas, l'organe de support est aussi mobile et/ou actionné par l'actionneur de l'outil électroportatif.

Dans le cas où l'outil électroportatif est un sécateur, sa lame mobile est l'organe d'usinage, car elle permet de couper un objet tel qu'une branche, et la contre-lame est l'organe de support, car elle supporte la branche pendant sa coupe.

Dans le cas où l'outil électroportatif est une scie circulaire, sa lame rotative est l'organe d'usinage, car elle permet de couper un objet tel qu'une pièce en bois, et le plateau comprenant le passage pour la lame et sur lequel l'objet s'appuie pendant la coupe est l'organe de support.

Dans le cas où l'outil électroportatif est un rabot, sa lame est l'organe d'usinage, car elle permet de couper un objet tel qu'une pièce en bois, et le plateau sur lequel l'objet s'appuie pendant la coupe est l'organe de support.

Dans le cas où l'outil électroportatif est une tronçonneuse portative, sa chaîne rotative est l'organe d'usinage, car elle permet de couper un objet, et le guide chaîne de la tronçonneuse portative autour duquel la chaîne rotative se déplace est l'organe de support.

Ces types d'outils sont devenus de plus en plus efficaces et arrivent à générer une force de plusieurs kilo-Newtons. Cependant cette efficacité a augmenté de façon importante le nombre d'accidents professionnels causés par de tels outils. Le besoin de sécurité par rapport au mouvement de la lame mobile de ces outils a donc augmenté rapidement.

Différentes solutions dans l'état de la technique essaient de répondre à ce besoin.

Notamment, plusieurs systèmes de sécurité dans l'état de la technique nécessitent que l'organe d'usinage et/ou l'organe de support soit(soient) réalisé(s) au moins en partie en matériau conducteur électrique : en effet, lorsqu'une main (ou un membre, ou en général une portion du corps) de l'utilisateur touche l'organe d'usinage et/ou l'organe de support, et notamment sa/leur portion en matériau conducteur électrique, ces systèmes sont arrangés pour modifier la vitesse de l'actionneur, par exemple afin de la réduire ou de l'annuler, et éventuellement déclencher une alarme (sonore et/ou visuelle). Dans la plupart des cas, un circuit électrique se ferme via la main (ou en général le corps) de l'utilisateur lorsqu'il touche l'organe d'usinage et/ou l'organe de support, et notamment sa/leur portion en matériau conducteur électrique : cette fermeture est détectée par exemple via une mesure d'une impédance.

En d'autres mots, certains outils électroportatifs comprennent :
- un corps au moins partiellement électriquement isolant, comprenant :
   - un actionneur,
   - une transmission reliant l'actionneur à un organe d'usinage, de façon à permettre un déplacement de l'organe d'usinage par rapport à un organe de support,
- l'organe d'usinage et/ou l'organe de support étant réalisé(s) au moins en partie en matériau conducteur électrique
- au moins une surface de contact électrique, arrangée pour entourer au moins partiellement le corps et pour être saisie par l'utilisateur.

Ces outils électroportatifs connus comprennent aussi un système de sécurité pour un utilisateur, ce système de sécurité étant arrangé pour mesurer une impédance entre la surface de contact électrique et l'organe d'usinage et/ou l'organe de support, et pour réduire ou annuler la vitesse de l'actionneur sur la base de cette mesure d'impédance afin de protéger l'utilisateur.

Un exemple non-limitatif d'un tel système de sécurité est par exemple décrit dans le document EP4137274 au nom de la demanderesse.

Cependant, dans ces solutions connues, pour obtenir un bon contact électrique entre l'outil et l'utilisateur, quelle que soit la préhension de l'outil par l'utilisateur, il est intéressant que la surface de contact électrique s'étende sur l'ensemble de la poignée. Ceci implique des contraintes fortes tant sur l'aspect visuel que sur la conception mécanique du corps de l'outil électroportatif.

EP3498083 décrit un sécateur motorisé électroportatif muni d'un dispositif de sécurité, ainsi qu'une borne, dite de référence, prévue pour être électriquement couplée à l'outil de coupe et au moins une borne, dite de contact, prévue pour être électriquement couplée au corps de l'opérateur. La solution décrite dans ce document ne mentionne pas le problème de prévoir un bon contact électrique entre l'outil et l'utilisateur quelle que soit la préhension de l'outil par l'utilisateur, ni offre ou suggère sa solution.

### Bref résumé de l'invention

Un but de la présente invention est de proposer un outil électroportatif exempt des limitations des outils électroportatifs connus.

Un autre but de la présente invention est de proposer un outil électroportatif qui permet d'obtenir un bon contact électrique entre la surface de contact électrique et l'utilisateur, quelle que soit la préhension de l'outil électroportatif par l'utilisateur, avec moins de contraintes des solutions connues.

Un autre but de la présente invention est de proposer un outil électroportatif alternatif aux outils électroportatifs connus.

Selon l'invention, ces buts sont atteints notamment au moyen de l'outil électroportatif selon la revendication 1 et d'un procédé de fabrication de l'outil électroportatif selon la revendication 9.

L'outil électroportatif selon l'invention comprend :
- un corps au moins partiellement électriquement isolant, comprenant :
   - un actionneur,
   - une transmission reliant l'actionneur à un organe d'usinage, de façon à permettre un déplacement de l'organe d'usinage par rapport à un organe de support,
- l'organe d'usinage et/ou l'organe de support étant réalisé(s) au moins en partie en matériau conducteur électrique,
- au moins une surface de contact électrique, arrangée pour entourer au moins partiellement le corps et pour être saisie par l'utilisateur.

Selon l'invention, l'outil électroportatif est arrangé pour comprendre un système de sécurité pour un utilisateur, ce système de sécurité étant arrangé pour mesurer une impédance entre la surface de contact électrique et l'organe d'usinage et/ou l'organe de support, et pour réduire ou annuler la vitesse de l'actionneur sur la base de cette mesure d'impédance afin de protéger l'utilisateur.

Selon l'invention, la surface de contact électrique comprend au moins deux zones de contact électrique qui sont distinctes et séparées, et l'outil électroportatif comprend un élément de liaison en matériau conducteur électrique à l'intérieur du corps de l'outil et arrangé pour être en contact électrique avec chaque zone de contact électrique, afin de relier électriquement les zones de contact électrique entre elles.

Dans un mode de réalisation préférentiel, l'élément de liaison est une plaque. Dans un autre mode de réalisation, il est un fil. En général, l'insertion de la plaque dans l'outil est plus industrialisable.

Grâce à la présence d'au moins deux zones de contact électrique qui sont distinctes et séparées et de l'élément de liaison en matériau conducteur électrique à l'intérieur du corps de l'outil, il possible d'obtenir un bon contact électrique entre l'outil et l'utilisateur quelle que soit la préhension de l'outil par l'utilisateur, car la surface de contact électrique s'étend sur l'ensemble de la poignée, avec moins de contraintes que les solutions connues. En effet, l'outil électroportatif selon l'invention a une grande surface de contact électrique tout en garantissant une grande liberté de son aspect visuel. La division de la surface de contact électrique en plusieurs zones de contact électrique connectées entre-elles crée des nervures entre ces zones, ce qui renforce la rigidité mécanique de la coque.

Dans un mode de réalisation, au moins une zone de contact électrique est souple, à savoir elle a une dureté appartenant à la plage [60-95] Shore A. Cela permet une tenue ferme et confortable de l'outil électroportatif.

Dans un mode de réalisation, au moins une zone de contact électrique est réalisée en élastomère.

Dans un mode de réalisation, le corps de l'outil électroportatif est réalisé en thermoplastique dur, à savoir ayant une dureté appartenant à la plage [65-90] Shore D.

Dans un mode de réalisation, l'outil électroportatif comprend au moins une dizaine de zones de contact électrique, par exemple vingt zones de contact électrique.

Dans un mode de réalisation, l'ensemble des zones de contact électrique s'étend sur l'ensemble de la poignée de l'outil électroportatif.

Dans un mode de réalisation, l'élément de liaison en matériau conducteur est dans, près ou contre une surface latérale interne de l'outil électroportatif. Ainsi le volume interne de l'outil est disponible pour le mécanisme de l'outil et permet donc la réalisation d'un outil compact et ergonomique.

Dans un mode de réalisation, l'élément de liaison en matériau conducteur électrique est électriquement isolé, par exemple car suffisamment éloignée, d'autres composants en matériau conducteur électrique dans le corps de l'outil électroportatif, comme le boîtier du moteur et/ou du moto-réducteur de l'outil électroportatif.

Dans un mode de réalisation, l'élément de liaison en matériau conducteur comprend des moyens, par exemple des trous, afin de garantir son positionnement et/ou sa fixation dans le corps de l'outil.

Dans un mode de réalisation, l'élément de liaison en matériau conducteur comprend une languette, notamment à une de ses extrémités.

Dans un mode de réalisation, l'outil électroportatif comprend un élément conducteur électrique, tel qu'un fil, reliant électriquement la plaque en matériau conducteur, par exemple sa languette, à un circuit de mesure d'impédance, l'organe d'usinage et/ou l'organe de support étant également connecté(s) à ce circuit.

La présente invention concerne aussi un procédé de fabrication de l'outil électroportatif selon l'invention, comprenant les étapes de :
- insertion dans le corps de l'outil de l'élément de liaison en matériau conducteur électrique,
- réalisation des deux zones de contact électrique,
- liaison électrique entre l'élément de liaison en matériau conducteur électrique et les zones de contact électrique.

Dans un mode de réalisation, le corps de l'outil électroportatif est réalisé par injection plastique.

Dans un mode de réalisation, la réalisation des zones de contact électrique est effectuée par surmoulage sur le corps d'un revêtement conducteur, notamment d'un revêtement souple conducteur.

Dans un mode de réalisation, l'insertion dans le corps de l'outil électroportatif de l'élément de liaison en matériau conducteur électrique est réalisée :
- après le surmoulage du revêtement conducteur,
- avant le surmoulage du revêtement conducteur, ou
- lors de la réalisation du corps de l'outil électroportatif.

### Brève description des figures

Des exemples de mise en oeuvre de l'invention sont indiqués dans la description illustrée par les figures annexées dans lesquelles :
La figure 1 illustre une vue en perspective d'un outil électroportatif selon un mode de réalisation de l'invention.
La figure 2 illustre une autre vue en perspective d'une portion d'un outil électroportatif selon un mode de réalisation de l'invention.
La figure 3 illustre une vue de face d'un outil électroportatif selon un mode de réalisation de l'invention.
La figure 4 illustre la section selon le plan A-A de l'outil électroportatif de la figure 3.

### Exemple(s) de mode(s) de réalisation de l'invention

Dans les figures illustrant la description suivante fournie à titre d'exemple, on fera référence, par simplicité, à un sécateur électroportatif. L'invention cependant n'est pas limitée à un tel instrument. L'invention n'est pas non plus limitée à l'agriculture, mais inclut aussi, par exemple des cisailles, des pinces, des presses, des tronçonneuses, une scie circulaire portative, une scie sauteuse portative, un rabot, une sertisseuse, une défonceuse, etc. pour des applications agricoles, viticoles, arboricoles, industrielles, artisanales, textiles, alimentaires, médicales, etc.

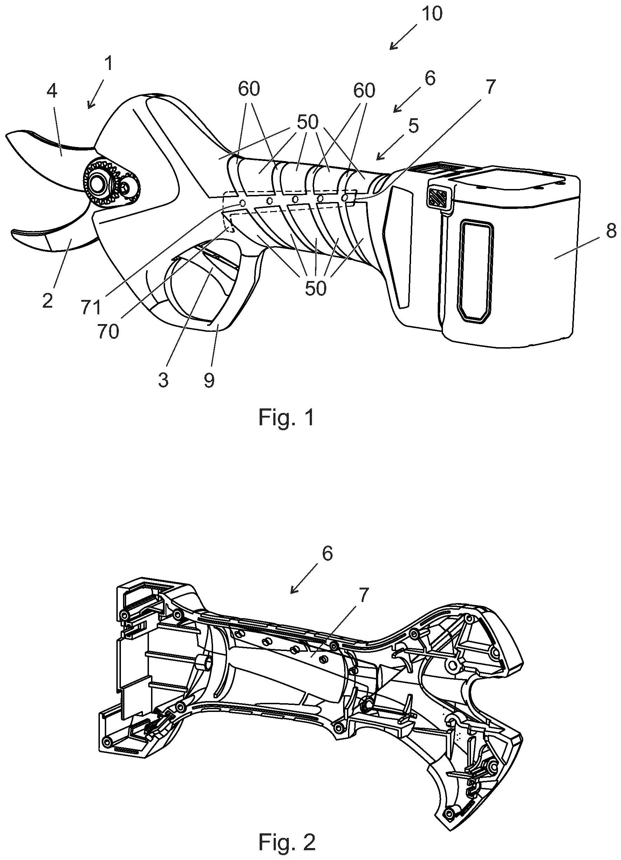

La figure 1 illustre une vue en perspective d'un outil électroportatif 10 selon un mode de réalisation de l'invention. Cet outil est arrangé pour être porté par un utilisateur, par exemple par un membre de l'utilisateur tel qu'une main. Dans une variante, cette même main permet de commander l'outil 10 via une gâchette 3. Dans l'exemple de la figure 1, l'outil électroportatif 10 comprend un corps 6, une garde 9 et une tête de coupe 1 comprenant un organe d'usinage 4 et un organe de support 2. L'organe d'usinage 4 et/ou l'organe de support 2 sont au moins en partie en matériau conducteur électrique.

En général, le corps 6 comprend deux demi-coques assemblées entre elles. Un exemple non limitatif d'une demi-coque est illustré sur la figure 2.

L'organe d'usinage 4 permet d'usiner un objet et entre en contact direct avec cet objet. Il est mobile pendant l'usinage de l'objet et actionné par un actionneur (non illustré) de l'outil électroportatif 10, par exemple un moteur électrique.

Comme expliqué, dans le contexte de la présente invention, le mot « usiner » indique toute opération effectuée sur l'objet qui permet de le transformer, par exemple de le couper, presser, trancher, raboter etc.

L'organe de support 2 supporte l'objet pendant son usinage et en général il est immobile pendant l'usinage de l'objet. En général, l'organe de support n'est pas actionné par l'actionneur de l'outil électroportatif 10. Sa présence est nécessaire pour réaliser cet usinage. Dans certains cas, l'organe de support 2 est aussi mobile et/ou actionné par l'actionneur de l'outil électroportatif 10. L'organe de support 2 entre également en contact direct avec cet objet pendant son usinage.

Dans le cas où l'outil électroportatif 10 est un sécateur, comme dans l'exemple de la figure 1, sa lame mobile est l'organe d'usinage 4, car elle permet de couper un objet tel qu'une branche, et la contre-lame est l'organe de support 2, car elle supporte la branche pendant sa coupe.

L'outil électroportatif 10 de la figure 1 comprend dans son corps une source d'alimentation 8. La source d'alimentation d'un tel outil électroportatif peut être par exemple une batterie ou bien un pack de batteries. Dans un autre mode de réalisation (non illustré), la source d'alimentation est une pièce séparée de l'outil électroportatif 10. En particulier l'utilisateur peut porter avec une main l'outil et simultanément porter sur lui, par exemple à l'aide d'un sac-à-dos, d'un harnais ou d'une ceinture, la source d'alimentation 8.

Dans un mode de réalisation, au moins une partie du corps 6 de l'outil électroportatif 10, et de préférence tout le corps 6, est réalisée par injection plastique, avec un matériau électriquement isolant, par exemple un thermoplastique dur.

Dans le corps 6 de l'outil électroportatif 10 est ensuite inséré un élément de liaison en matériau conducteur électrique 7, par exemple et de façon non limitative en cuivre. Cet élément de liaison 7 est par exemple et de façon non limitative une plaque, comme illustré sur la figure 1. La plaque 7 est illustrée en pointillé sur la figure 1 pour indiquer qu'elle est dans le corps 6 de l'outil électroportatif 10.

Dans une mode de réalisation, l'élément de liaison 7 a une forme allongée. Dans une mode de réalisation, l'épaisseur de l'élément de liaison 7 est au moins un ordre de grandeur plus petite par rapport à sa largeur et/ou sa longueur. Dans une mode de réalisation, l'élément de liaison 7 a une forme polygonale, par exemple sensiblement rectangulaire.

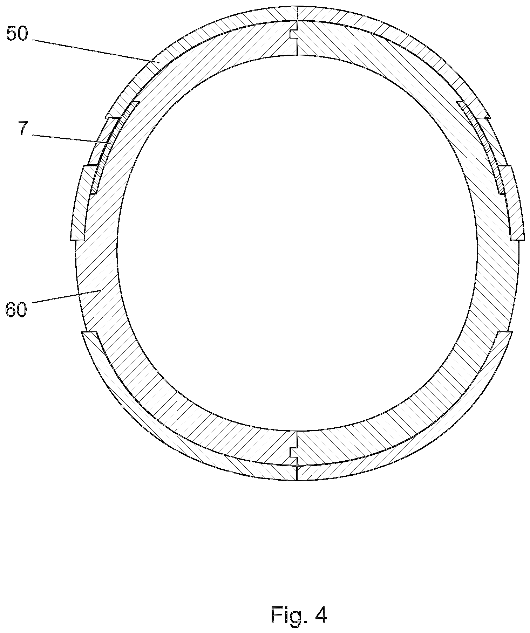

Dans un mode de réalisation, l'élément de liaison 7 est partiellement englobé dans une demi-coque du corps 6 de l'outil, comme par exemple illustré sur la figure 4. Tel est le cas si par exemple l'élément de liaison 7 est surmoulé lors de l'injection de la demi-coque.

Dans un mode de réalisation, l'élément de liaison 7 est près ou contre une surface latérale interne de l'outil électroportatif 10, comme mieux visible sur la figure 2. En d'autres mots, sa distance avec la surface latérale interne de l'outil électroportatif 10 concernée est inférieure ou égale à 2 cm. Tel est le cas si par exemple l'élément de liaison 7 est inséré après l'injection du corps 6, mais avant ou après le surmoulage des zones de contact électrique 50.

Dans le mode de réalisation des figures 1 et 2, l'élément de liaison 7 comprend à l'une de ses extrémités une languette 70, sensiblement perpendiculaire au corps principal de l'élément de liaison 7. Dans un mode de réalisation, l'outil électroportatif 10 comprend un élément conducteur électrique tel qu'un fil (non illustré) reliant électriquement l'élément de liaison 7, notamment la languette 70, à un circuit de mesure d'impédance non illustré, l'organe d'usinage et/ou l'organe de support étant également connecté(s) à ce circuit.

Dans un mode de réalisation, l'élément de liaison 7 comprend des moyens, par exemple des trous 71, afin de garantir son positionnement et/ou sa fixation dans le corps de l'outil électroportatif 10, par exemple lors de l'injection du corps 6 et/ou pour recevoir des moyens de fixation tels que des vis par exemple.

Selon l'invention, au moins deux zones de contact électrique 50 sont réalisées dans l'outil électroportatif 10, et l'élément de liaison en matériau conducteur électrique 7 et les zones de contact électrique 50 sont reliées électriquement. En d'autres mots, l'élément de liaison 7 permet de connecter les zones de contact électrique 50. Dans la figure 4, l'élément de liaison 7 est directement en contact électrique avec les zones de contact électrique 50. Dans d'autres modes de réalisation, l'élément de liaison 7 est indirectement en contact électrique avec les zones de contact électrique 50, par exemple via (au moins) un élément conducteur électrique tel qu'un fil.

Dans un mode de réalisation, la réalisation des deux zones de contact électrique 50 est effectuée par surmoulage sur le corps 6 d'un revêtement conducteur, notamment d'un revêtement souple conducteur, par exemple d'un élastomère souple conducteur.

Le corps 6 de l'outil électroportatif 10, et notamment sa poignée 5, à savoir sa partie destinée à être saisie par l'utilisateur, comprend donc au moins deux zones de contact électrique 50 distinctes et physiquement séparées, par exemple par une portion 60 du corps 6 qui est électriquement isolante.

Dans un mode de réalisation, chaque zone de contact électrique 50 dépasse, par exemple de quelques millimètres, la portion électriquement isolante 60. En d'autres mots, chaque zone de contact électrique 50 dépasse par rapport au corps de l'outil. Cela permet de favoriser le contact électrique avec l'utilisateur.

Dans un mode de réalisation, au moins une zone de contact électrique 50, et de préférence toutes les zones de contact électrique 50, est(sont) souple(s). Cela permet une tenue ferme et confortable de l'outil électroportatif 10.

Dans un mode de réalisation, au moins une zone de contact électrique 50, et de préférence toutes les zones de contact électrique 50, est(sont) réalisée(s) en élastomère.

Dans un mode de réalisation, l'outil électroportatif 10 comprend au moins une dizaine de zones 50 de contact électrique.

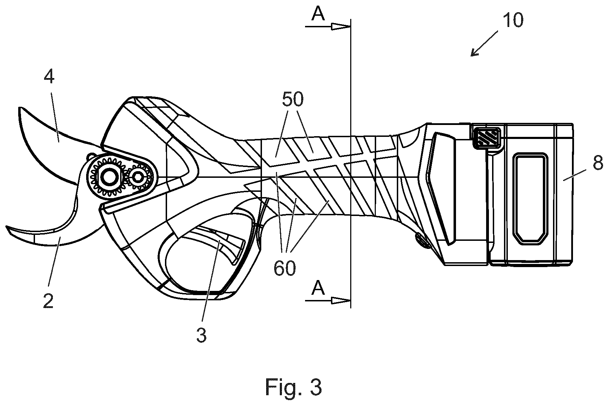

Dans un mode de réalisation, l'outil électroportatif et comme visible sur les figures 1 et 3, les zones de contact électrique 50 n'ont pas nécessairement les mêmes dimensions ni la même forme.

Dans un mode de réalisation, l'ensemble des zones de contact électrique 50 s'étend sur l'ensemble de la poignée 5 de l'outil électroportatif.

Au moins une zone de contact électrique 50, et de préférence toutes les zones de contact électrique 50, est(sont) arrangée(s) pour entourer au moins partiellement le corps 6 et pour être saisie(s) par un premier membre de l'utilisateur, par exemple par une main, afin de porter et/ou actionner l'outil électroportatif 10 (par exemple via la gâchette 3).

Bien que sur les figures 1 et 3 chaque zone de contact électrique 50 n'entoure pas complètement le corps 6, cette caractéristique n'est pas nécessaire et l'outil électroportatif 10 pourrait comprendre au moins une zone de contact électrique 50 qui entoure complètement le corps 6 de l'outil électroportatif 10.

Dans un mode de réalisation, l'insertion dans le corps 6 de l'outil électroportatif 10 de l'élément de liaison 7 en matériau conducteur électrique est réalisée :
- après le surmoulage du revêtement conducteur,
- avant le surmoulage du revêtement conducteur, ou
- lors de la réalisation du corps 6 de l'outil électroportatif 10.

Dans l'exemple de la figure 4, un élément de liaison 7 en matériau conducteur électrique est surmoulé dans chaque demi-coque du corps de l'outil électroportatif 10.

### Numéros de référence employés sur les figures

- 1: Tête de coupe
- 2: Contre-lame
- 3: Gâchette
- 4: Lame mobile
- 5: Poignée
- 6: Corps
- 7: Elément de liaison
- 8: Source d'alimentation
- 9: Garde
- 10: Outil électroportatif
- 50: Zone de contact électrique
- 60: Portion électriquement isolante
- 70: Languette
- 71: Trous

## Revendications

1. Outil électroportatif (10) comprenant :
- un corps (6) au moins partiellement électriquement isolant, comprenant :
- un actionneur,
- une transmission reliant l'actionneur à un organe d'usinage (4), de façon à permettre un déplacement de l'organe d'usinage (4) par rapport à un organe de support (2),
- l'organe d'usinage (4) et/ou l'organe de support (2) étant réalisé(s) au moins en partie en matériau conducteur électrique
- au moins une surface de contact électrique, arrangée pour entourer au moins partiellement le corps (6) et pour être saisie par l'utilisateur,
ledit outil électroportatif (10) étant arrangé pour comprendre un système de sécurité pour un utilisateur, ledit système de sécurité étant arrangé pour mesurer une impédance entre la surface de contact électrique et l'organe d'usinage (4) et/ou l'organe de support (2), et pour réduire ou annuler la vitesse de l'actionneur sur la base de cette mesure d'impédance afin de protéger l'utilisateur,
**caractérisé en ce que**
la surface de contact électrique comprend au moins deux zones de contact électrique (50) qui sont distinctes et séparées,
et **en ce que**
l'outil électroportatif (10) comprend un élément de liaison (7) en matériau conducteur électrique à l'intérieur du corps (6) de l'outil électroportatif (10) et arrangé pour être en contact électrique avec chaque zone de contact électrique (50), afin de relier électriquement les zones de contact électrique (50) entre elles.

2. Outil électroportatif (10) selon la revendication 1, dans lequel au moins une zone de contact électrique (50) est souple à savoir sa dureté appartient à la plage [60-95] Shore A.

3. Outil électroportatif (10) selon l'une des revendications 1 ou 2, dans lequel au moins une zone de contact électrique (50) est réalisée en élastomère.

4. Outil électroportatif (10) selon l'une des revendications 1 à 3, dans lequel le corps de l'outil électroportatif est réalisé en thermoplastique dur à savoir sa dureté appartient à la plage [65-90] Shore D.

5. Outil électroportatif (10) selon l'une des revendications 1 à 4, dans lequel l'élément de liaison (7) est dans, près ou contre une surface latérale interne de l'outil électroportatif (10).

6. Outil électroportatif (10) selon l'une des revendications 1 à 5, dans lequel l'élément de liaison (7) comprend des moyens, afin de garantir son positionnement et/ou sa fixation dans le corps de l'outil.

7. Outil électroportatif (10) selon l'une des revendications 1 à 6, comprenant un élément conducteur électrique reliant électriquement l'élément de liaison (7) à un circuit de mesure d'impédance, l'organe d'usinage (4) et/ou l'organe de support (2) étant également connecté(s) à ce circuit.

8. Outil électroportatif (10) selon l'une des revendications 1 à 7, dans lequel l'élément de liaison (7) est une plaque.

9. Procédé de fabrication de l'outil électroportatif (10) l'une des revendications 1 à 8, comprenant les étapes de :
- insertion dans le corps (6) de l'outil électroportatif (10) de l'élément de liaison (7) en matériau conducteur électrique,
- réalisation des deux zones de contact électrique (50),
- liaison électrique entre l'élément de liaison (7) en matériau conducteur électrique et les zones de contact électrique (50).

10. Procédé selon la revendication 9, comprenant l'étape de réalisation du corps (6) de l'outil électroportatif (10) par injection plastique.

11. Procédé selon l'une des revendications 9 ou 10, la réalisation des deux zones de contact électrique (50) étant effectuée par surmoulage sur le corps (6) d'un revêtement conducteur.

12. Procédé selon l'une des revendications 9 à 11, l'insertion dans le corps (6) de l'outil électroportatif (10) de l'élément de liaison (7) en matériau conducteur électrique étant réalisée :
- après le surmoulage du revêtement conducteur
- avant le surmoulage du revêtement conducteur, ou
- lors de la réalisation du corps (6) de l'outil électroportatif (10).
